# EUROPEAN PATENT APPLICATION

(11) **EP 4 656 572 A1**
(43) Date of publication of application: **03.12.2025**
(21) Application number: 25171393.9
(22) Date of filing: 17.04.2025
(51) Int. Cl.: B66B 5/00, G01S 7/497

(54) **ELEVATOR SYSTEM WITH COMBINED LIDAR AND VISIBLE SENSOR GUIDE**

(30) Priority: 31.05.2024 US 202418680057
(71) Applicant: Otis Elevator Company, Farmington, Connecticut 06032 (US)
(72) Inventor: Auxier, James Tilsley, Farmington, 06032 (US)
(74) Representative: Schmitt-Nilson Schraud Waibel Wohlfrom Patentanwälte Partnerschaft mbB

(57) **Abstract**

A sensor having: a housing extending from a front to a back, where the front has a transparent cover glass; an infrared (IR) beam emitter within the housing that emits a first beam along a first path; a visible light beam emitter within the housing that emits a second beam along a second path that is noncongruent with the first path; and a beam guide within the housing that engages the first and second beams so that the first and second beams are coaxial or parallel and exit the front of the housing.

## Description

The embodiments described herein relate to an elevator system and more specifically to an elevator system with a combined LiDAR and visible sensor guide.

It is desirable to continuously detect when mechanics may be in the path of moving elevator components, such as an elevator car or counterweight, within the hoistway. Utilization of LiDAR sensors may facilitate this detection. However, an installation time of the sensors may be a concern, with one factor being sensor alignment.

According to an aspect of the disclosure, a sensor is provided, including: a housing extending from a front to a back, where the front has a transparent cover glass; an infrared (IR) beam emitter within the housing that emits a first beam along a first path; a visible light beam emitter within the housing that emits a second beam along a second path that is noncongruent with the first path; and a beam guide within the housing that engages the first and second beams so that the first and second beams are coaxial or parallel and exit the front of the housing.

Particular embodiments further may include at least one, or a plurality of, the following optional features, alone or in combination with each other:

In addition to one or more aspects of the sensor, or as an alternate, the IR beam emitter is a near infrared laser diode (NIR-LD) that emits the first beam along the first path, wherein the first path is toward the front of the housing; the visible light beam emitter is a visible laser diode (VLD) that emits the second beam along the second path; and the beam guide is a dichroic mirror disposed along the first path and at a first angle to the second path such that the first and second beams are coaxial or parallel and exit the front of the housing.

In addition to one or more aspects of the sensor, or as an alternate, the beam guide is configured to allow transmission of the first beam, and reflection of the second beam.

In addition to one or more aspects of the sensor, or as an alternate, the sensor includes: beam emitting components on a first side of the housing, the beam emitting components include, from the back of the housing to the front of the housing, the IR beam emitter, a first lens and a beam expander; and beam receiving components on a second side of the housing, the beam receiving components include, from the front of the housing to the back of the housing, a second lens, an optical filter, and a detector array.

In addition to one or more aspects of the sensor, or as an alternate, the beam expander is a diffractive optical element (DOE) or diffuser.

In addition to one or more aspects of the sensor, or as an alternate, the detector array includes a photodiode.

In addition to one or more aspects of the sensor, or as an alternate, the photodiode is an avalanche photodiode (APD) or a complementary metal-oxide-semiconductor (CMOS).

In addition to one or more aspects of the sensor, or as an alternate, the VLD is located on the first side of the housing, adjacent to the beam emitting components.

In addition to one or more aspects of the sensor, or as an alternate, the VLD is configured so that the second path is normal to the first path prior to engaging with the beam guide.

According to another aspect of the disclosure, an elevator system is provided, including: an elevator car, having a car top and a guardrail mounted to the car top; one or more sensors having one or more of the above disclosed aspects mounted to the guardrail.

Particular embodiments further may include at least one, or a plurality of, the following optional features, alone or in combination with each other:

In addition to one or more aspects of the elevator system, or as an alternate, the elevator system includes a plurality of the sensors mounted to the guardrail and distributed about the car top of the elevator car.

In addition to one or more aspects of the elevator system, or as an alternate, the elevator system includes an elevator controller that is configured to: receive sensor data from the one or more of the sensors; stop the elevator car or run the elevator car in maintenance mode upon determining that the sensor data indicates that an object is detected on the top of the elevator car.

In addition to one or more aspects of the elevator system, or as an alternate, the elevator controller is configured to communicate with the one or more of the sensors over a wireless network.

According to another aspect of the disclosure, an elevator system is provided, including: a hoistway that defines a pit; a pit ladder having ladder rungs; and one or more sensors having one or more of the above disclosed aspects mounted within the pit and configured so that an emitted beam from the another one of the sensors extends adjacent to each of the ladder rungs of the pit ladder.

Particular embodiments further may include at least one, or a plurality of, the following optional features, alone or in combination with each other:

In addition to one or more aspects of the another embodiment of the elevator system, or as an alternate, the elevator system includes an elevator controller that is configured to: receive sensor data from the one or more of the sensors; stop an elevator car of the system or run the elevator car in maintenance mode upon determining that the sensor data indicates that an object is detected on the pit ladder.

In addition to one or more aspects of the elevator system, or as an alternate, the elevator controller is configured to communicate with the one or more of the sensors over a wireless network.

According to another aspect of the disclosure, a method of controlling an elevator system is provided, including: monitoring, by a controller, for sensor data from one or more sensors located on a top of an elevator car that indicates an object is detected on the top of the elevator car, wherein the sensors each include a housing extending from a front to a back, where the front has a transparent cover glass; an infrared (IR) beam emitter within the housing that emits a first beam along a first path; a visible light beam emitter within the housing that emits a second beam along a second path that is noncongruent with the first path; and a beam guide within the housing that engages the first and second beams so that the first and second beams are coaxial or parallel and exit the front of the housing; and stopping the elevator car or running the elevator car in maintenance mode upon determining that the sensor data indicates that the object is detected on the top of the elevator car.

Particular embodiments further may include at least one, or a plurality of, the following optional features, alone or in combination with each other:

In addition to one or more aspects of the method, or as an alternate, the method includes: confirming an alignment of the one or more sensors relative to the top of the elevator car by visually inspecting the second beam emitted from the one or more sensors is over and extends parallel to the top of the elevator car.

According to an aspect of the disclosure, a method of controlling an elevator system is provided, including: monitoring, by a controller, for sensor data from one or more sensors located in a pit of a hoistway that indicates an object is detected on a pit ladder located within the pit, wherein the sensors each include a housing extending from a front to a back, where the front has a transparent cover glass; an infrared (IR) beam emitter within the housing that emits a first beam along a first path; a visible light beam emitter within the housing that emits a second beam along a second path that is noncongruent with the first path; and a beam guide within the housing that engages the first and second beams so that the first and second beams are coaxial or parallel and exit the front of the housing; and stopping an elevator car of the system or running the elevator car in maintenance mode upon determining that the sensor data indicates that the object is detected on the pit ladder.

Particular embodiments further may include at least one, or a plurality of, the following optional features, alone or in combination with each other:

In addition to one or more aspects of the another embodiment of the method, or as an alternate, the method includes confirming an alignment of the one or more sensors relative to the pit ladder by visually inspecting that the second beam emitted from the one or more sensors is along the pit ladder and adjacent to rungs of the pit ladder.

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2A shows a sensor utilized with the elevator system of FIG. 1;
FIG. 2B shows additional aspects of the sensor;
FIG. 3 shows a method of controlling the elevator system with the sensors mounted to the elevator car; and

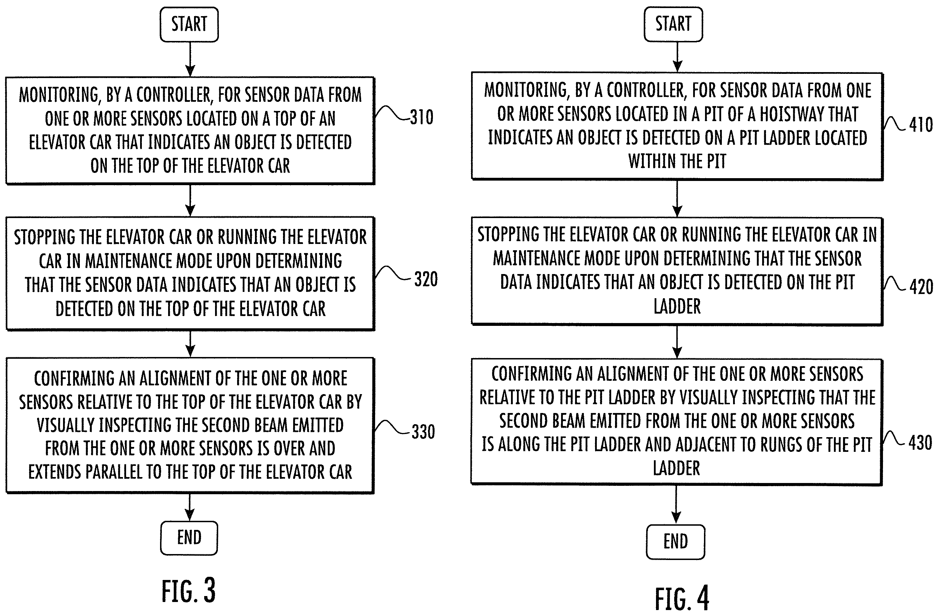

FIG. 3 shows a method of controlling the elevator system with the sensors mounted within the pit.

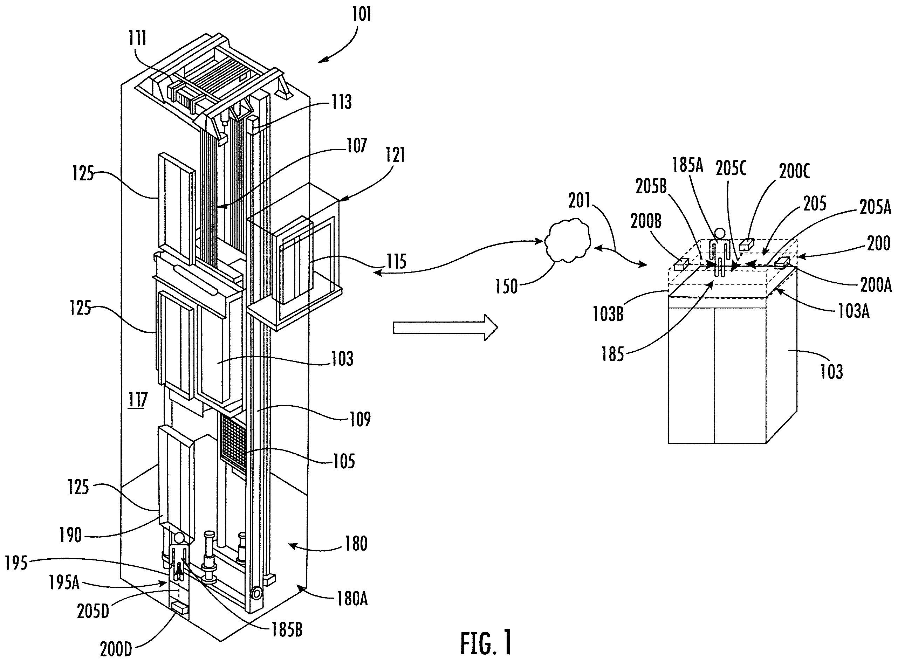

FIG. 1 is a perspective view of an elevator system 101 including an elevator car 103, a counterweight 105, a tension member 107, a guide rail (or rail system) 109, a machine (or machine system) 111, a position reference system 113, and an electronic elevator controller (controller) 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft (or hoistway) 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the hoistway or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

The elevator car 103 may have a car top 103A with safety guardrails 103B to ensure that a first mechanic 185A (generally a mechanic 185) remains safely situated when working atop the elevator car 103. The hoistway 117 may have a pit 180 with a ladder 195 extending from access doors 190 to the pit floor 180A. The access doors 190 may also function as an access point for a first (or lower) floor level 125 for the elevator car 103. A second mechanic 185B may enter the pit via the ladder 195.

A plurality of sensors, generally 200, may be utilized to detect the presence of a mechanic 185. There may be a plurality of sensors, including but not limited to first, second and third sensors 200A, 200B, 200C mounted to the safety rails 103B (though fewer or more sensors on the rails is within the scope of the embodiments) and a fourth sensor 200D in the pit 180, at the ladder 195 (though a different placement of sensor in the pit, and/or the use of additional sensors in the pit, is within the scope of the embodiments).

Regarding the pit, there can also be a sensor located on the wall of the pit (near a corner) that scans the area parallel to the pit floor for mechanic presence. On the top of the car, there can be at least one sensor configured to look for the location of the counterweight, which may or may not be one of the same sensors scanning for mechanic presence. A second beam could be used during setup to ensure the counterweight passes within its field of view.

The sensor data 201 may be communicated to the controller 115 in the controller room 121 via a connection over a wireless network 150 (or a wired network) that is established between the sensors 200 and the controller 115. The controller 115 may alternatively be integrated into the elevator car 103. If the sensor data 201 is indicative of the presence of a mechanic 185, either on top 103A of the elevator car 103 or on the pit ladder 195, the controller 115 may stop the elevator car 103 or put the elevator car 103 in a maintenance mode, which results in a reduced speed.

In one embodiment, another control module (one for car top and another for the pit area) is configured to communicate with the sensors, and place the car in a safe state by opening the safety chain. For simplicity herein, reference to the controller 115 shall include independent actions by the control module. The controller 115 decision may depend on the relative positioning of the car 103, the mechanic 185, the counterweight 105 and the pit 180.

The sensors 200 may be LiDAR (light detection and ranging) sensors. With a LiDAR sensor, laser light is sent from a source (transmitter) and reflected from objects. The reflected light is detected by the system receiver and the time of flight (TOF) is used to develop a distance map of the objects. The sensors 200 emit respective infrared (IR) beams, generally 205, including first through fourth IR beams 205A-205D emitted from the ones of the sensors 200. The first through third IR beams 205A-205C may extend over the top 103A of the elevator car 103 and the fourth IR beam 205B may extend along the ladder rungs 195A of the pit ladder 195.

For the sensors 200 to operate accurately, the IR beams 205 should be directed along a predetermined path. For example, the first through third IR beams 205A-205C should extend over and parallel to the top 103A of the elevator car 103. The fourth IR beam 205D should extend parallel to the ladder 195 so that it is adjacent to each of the rungs 195A. If the IR beams 205 from the different sensors 200 are along a skewed path compared with the predetermined path, the sensors 200 could miss the mechanic 185, impacting the ability of the controller 115 to properly control the elevator car 103.

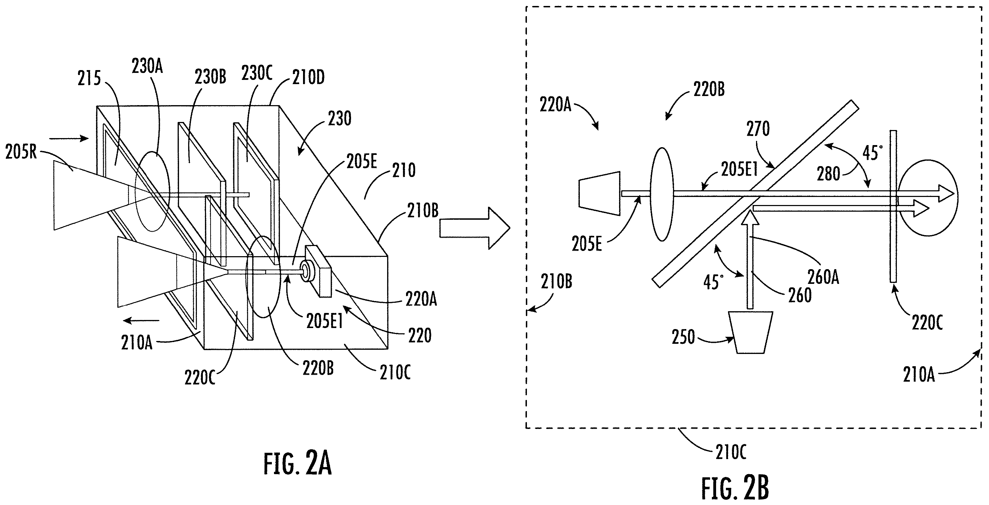

Turning to FIG. 2A, a sensor 200 is shown. The sensor 200 has a housing 210 extending from a front 210A to a back 210B that are depthwise spaced from each other, and between first and second sides 210C, 210D that are widthwise spaced from each other. The housing 210 may define a generally rectangular box. The housing 210 may have a transparent cover glass 215 defining the front 210A of the housing 210, through which beams 205 are emitted and received. Within the housing 210 are beam emitting components, generally 220, that are adjacent to the first side 210C, and beam receiving components, generally 230, that are adjacent to the second side 210D.

The beam emitting components 220, from the back 210B of the housing 210 to the front 210A of the housing 210, may include an NIR (near infrared)-LD (laser diode) (generally an IR laser) 220A that produces an emitted (or first) beam 205E along a first path 205E1, an emitter-side (or first) lens 220B, and a beam expander 220C which may be a diffractive optical element (DOE) or diffuser that expands the emitted beam 205E by a predetermine amount. The receiving components 230, from the front 210A of the housing 210 to the back 210B of the housing 210 may include a receiving-side (or second) lens 230A to focus a received beam 205R, an optical filter 230B and a detector array 230C, which may include a photodiode, which may be an ADP (avalanche photodiode) or a CMOS (complementary metal-oxide-semiconductor).

As shown in FIG. 2B the beam emitting components 220 include, from the back 210B of the housing 210 to the front 210A of the housing 210, the IR laser 220A, the first lens 220B and the beam expander 220C. Between the first lens 220B and the beam expander 220C, according to the embodiments, a visible laser diode (VLD) 250 (or visible light beam emitter) emits a reference (or second) beam 260 of visible light along a second path 260A that is noncongruent (not aligned) with the first path 205A1. A beam guide 270, which may be a dichroic mirror, disposed along the first path 205E1 and at an angle 280 (or first angle) to the second path 260A aligns the reference beam 260 so that it is coaxial or parallel with the emitted beam 205E and is directed out of the front 210A of the housing 210. The mirror 270 is configured, e.g. utilizing an applicable coating, to allow transmission of the IR light, and reflection of the visible light.

The VLD 250 may be at any position within the first side 210C of the housing 210, with the beam emitting components 220, so long as it does not interfere with the operation of the beam emitting components 220. As indicated, the beam guide 270 is positioned at the first angle (or angle) 280, relative to the emitted beam 205E such that, regardless of where the VLD 250 is located within the first side 210C of the housing 210, the reference beam 260 is coaxial or parallel with the emitted beam 205E. As shown the VLD 250 is closer to the first side 210C of the housing 210 than the beam emitting components 220 and is oriented so that the reference beam 260 is normal to the emitted beam 205E as it impinges on the beam guide 270. With this configuration, the beam guide 270 is at a forty five degree angle 280 to the emitted beam 205E, but this not intended on limiting the position or orientation of the VLD 250, the reference beam 260 or the beam guide 270.

In operation, the reference beam 260 is visible while the emitted beam 205E is not. As a result, the reference beam 260 is utilized to accurately orient the sensors 200 on top 103A of the elevator car 103 and at the pit ladder 195. This provides for improved accuracy of the sensors 200 and thereby providing improved protection for the mechanic 185 attending to the elevator system 101.

Turning to FIG. 3, a flowchart shows a method of controlling the elevator system 101. As shown in block 305, the method includes confirming an alignment of the one or more sensors 200 relative to the top 103A of the elevator car 130 by visually inspecting the second beam 260 emitted from the one or more sensors 200 is over and extends parallel to the top 103A of the elevator car 103. As shown in block 310 the method includes monitoring, by the controller 115, for sensor data 201 from the one or more sensors 200 located on the top 103A of the elevator car 103, where the sensor data 201 indicates an object, such as a mechanic 185, is detected on the top 103A of the elevator car 103. As shown in block 320 the method includes the controller 115 stopping the elevator car 103A or running the elevator car 103A in maintenance mode upon determining that the sensor data 201 indicates that an object is detected on the top 103A of the elevator car 103.Turning to FIG. 4, a flowchart shows a method of controlling an elevator system 101. As shown in block 405 the method includes confirming an alignment of the one or more sensors 200 relative to the pit ladder 195 by visually inspecting that the second beam 260 emitted from the one or more sensors 200 is along the pit ladder 195 and adjacent to rungs 195A of the pit ladder 195. As shown in block 410 the method includes monitoring, by the controller 115, for sensor data 201 from the one or more sensors 200 located in the pit 180 of the hoistway 117 that indicates an object, such a mechanic 185, is detected on the pit ladder 195 located within the pit 180. As shown in block 420 the method includes the controller 115 stopping the elevator car 103 or running the elevator car 103 in maintenance mode upon determining that the sensor data 201 indicates that an object is detected on the pit ladder 195.

The above embodiments provide a system that projects a reference (alignment) beam from the same transmission optics as the LiDAR sensor itself. This is accomplished by inserting a dichroic mirror, that is, a dichroic beamsplitter or filter, in the path of the IR light transmission beam at, for example, a 45 degree angle, and providing a second visible light source that is, for example, perpendicular to the original beam also aimed at the same dichroic mirror. The mirror is configured to allow transmission of the IR light, and reflection of the visible light. This way, the two light sources may be aligned into a single, coaxial or parallel transmission path that visibly informs a mechanic where the LiDAR sensor is aligned.

Benefits of the embodiments include a reduction in time that a mechanic spends performing alignment without a visible guide. The embodiments allow for a relatively easy way to check for proper alignment during maintenance. The embodiments allow for an exact alignment with the LiDAR light source. The embodiments do not require separate alignment devices that could add extra expense and may be less accurate.

Wireless connections identified above may apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Other applicable protocols include Low Power WAN (LPWAN), which is a wireless wide area network (WAN) designed to allow long-range communications at a low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. Such wireless connections may also include radiofrequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. Other LPWAN-IOT technologies include narrowband internet of things (NB-IOT) and Category M1 internet of things (Cat M1-IOT). Wireless communications for the disclosed systems may include cellular, e.g. 2G/3G/4G (etc.). The above is not intended on limiting the scope of applicable wireless technologies.

Wired connections identified above may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a sever/client protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allow microcontrollers and devices to communicate with each other in applications without a host computer. CAN is a message-based protocol released by the International Organization for Standards (ISO). The above is not intended on limiting the scope of applicable wired technologies.

As indicated, when data is transmitted over a network between end processors, the data may be transmitted in raw form or may be processed in whole or part at any one of the end processors or an intermediate processor, e.g., at a cloud service or other processor. The data may be parsed at any one of the processors, partially or completely processed or complied, and may then be stitched together or maintained as separate packets of information.

Each processor identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present disclosure. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A sensor including:
a housing extending from a front to a back, where the front has a transparent cover glass;
an infrared (IR) beam emitter within the housing that emits a first beam along a first path;
a visible light beam emitter within the housing that emits a second beam along a second path that is noncongruent with the first path; and
a beam guide within the housing that engages the first and second beams so that the first and second beams are coaxial or parallel and exit the front of the housing.

2. The sensor of claim 1, wherein
the IR beam emitter is a near infrared laser diode (NIR-LD) that emits the first beam along the first path, wherein the first path is toward the front of the housing;
the visible light beam emitter is a visible laser diode (VLD) that emits the second beam along the second path; and
the beam guide is a dichroic mirror disposed along the first path and at a first angle to the second path such that the first and second beams are coaxial or parallel and exit the front of the housing.

3. The sensor of claim 2, wherein the beam guide is configured to allow transmission of the first beam, and reflection of the second beam.

4. The sensor of claim 3, wherein the sensor includes:
beam emitting components on a first side of the housing, the beam emitting components include, from the back of the housing to the front of the housing, the IR beam emitter, a first lens and a beam expander; and
beam receiving components on a second side of the housing, the beam receiving components include, from the front of the housing to the back of the housing, a second lens, an optical filter, and a detector array.

5. The sensor of claim 4, wherein the beam expander is a diffractive optical element (DOE) or diffuser; and/or wherein the detector array includes a photodiode; and/or wherein the photodiode is an avalanche photodiode (APD) or a complementary metal-oxide-semiconductor (CMOS).

6. The sensor of claim 4 or 5, wherein the VLD is located on the first side of the housing, adjacent to the beam emitting components.

7. The sensor of claim 6, wherein the VLD is configured so that the second path is normal to the first path prior to engaging with the beam guide.

8. An elevator system comprising an elevator car, having a car top and a guardrail mounted to the car top;
wherein:
one or more of the sensors according to any of claims 1 to 7 is/are mounted to the guardrail; or
one or more of the sensors according to any of claims 1 to 9 is/are affixed to a corner of the car top or another surface near an edge of the car top.

9. The elevator system of claim 8, including
a plurality of the sensors mounted to the guardrail and distributed about the car top of the elevator car.

10. The elevator system of claim 8 or 9, including
an elevator controller that is configured to:
receive sensor data from the one or more of the sensors;
stop the elevator car or run the elevator car in maintenance mode upon determining that the sensor data indicates that an object is detected on the top of the elevator car.

11. The elevator system of claim 10, wherein:
the elevator controller is configured to communicate with the one or more of the sensors over a wireless network; and/or
another control module is configured to communicate with the sensors, and place the car in a safe state by opening the safety chain.

12. An elevator system, including:
a hoistway that defines a pit;
a pit ladder having ladder rungs; and
one or more of the sensors according to any of claims 1 to 7, the one or more sensors mounted within the pit and configured so that an emitted beam from the another one of the sensors extends adjacent to each of the ladder rungs of the pit ladder.

13. The elevator system of claim 12, including an elevator controller that is configured to:
receive sensor data from the one or more of the sensors;
stop an elevator car of the system or run the elevator car in maintenance mode upon determining that the sensor data indicates that an object is detected on the pit ladder; and/or
wherein the elevator controller is configured to communicate with the one or more of the sensors over a wireless network.

14. A method of controlling an elevator system, including:
monitoring, by a controller, for sensor data from one or more sensors located on a top of an elevator car that indicates an object is detected on the top of the elevator car,
wherein the sensors each include a housing extending from a front to a back, where the front has a transparent cover glass; an infrared (IR) beam emitter within the housing that emits a first beam along a first path; a visible light beam emitter within the housing that emits a second beam along a second path that is noncongruent with the first path; and a beam guide within the housing that engages the first and second beams so that the first and second beams are coaxial or parallel and exit the front of the housing; and
stopping the elevator car or running the elevator car in maintenance mode upon determining that the sensor data indicates that the object is detected on the top of the elevator car.

15. The method of claim 14,
including:
confirming an alignment of the one or more sensors relative to the top of the elevator car by visually inspecting the second beam emitted from the one or more sensors is over and extends parallel to the top of the elevator car; and/or
including:
monitoring, by a controller, for sensor data from one or more sensors located in a pit of a hoistway that indicates an object is detected on a pit ladder located within the pit,
wherein the sensors each include a housing extending from a front to a back, where the front has a transparent cover glass; an infrared (IR) beam emitter within the housing that emits a first beam along a first path; a visible light beam emitter within the housing that emits a second beam along a second path that is noncongruent with the
first path; and a beam guide within the housing that engages the first and second beams so that the first and second beams are coaxial or parallel and exit the front of the housing; and
stopping an elevator car of the system or running the elevator car in maintenance mode upon determining that the sensor data indicates that the object is detected on the pit ladder; and/or
including:
confirming an alignment of the one or more sensors relative to the pit ladder by visually inspecting that the second beam emitted from the one or more sensors is along the pit ladder and adjacent to rungs of the pit ladder.
